# EUROPÄISCHE PATENTSCHRIFT

(11) **EP 1 313 313 B1**
(45) Veröffentlichungstag und Bekanntmachung des Hinweises auf die Patenterteilung: **22.08.2012**
(21) Anmeldenummer: 02400047.3
(22) Anmeldetag: 12.11.2002
(51) Int. Cl.: H04N 5/44

(54) **Fernsehgerät**
Television apparatus
Appareil de télévision

(30) Priorität: 16.11.2001 DE 10156514
(43) Veröffentlichungstag der Anmeldung: 21.05.2003
(73) Patentinhaber: Grundig Multimedia B.V., 1077 ZX Amsterdam (NL)
(72) Erfinder: Payer, Wolfgang, 91448 Emskirchen (DE); Finsterer, Harald, 90471 Nürnberg (DE)
(74) Vertreter: LOUIS, PÖHLAU, LOHRENTZ

(56) Entgegenhaltungen:
- WO-A-98/36563
- US-A- 4 315 276
- US-A- 5 907 321
- US-A1- 2001 035 917
- US-B1- 6 317 780
- PATENT ABSTRACTS OF JAPAN Bd. 2000, Nr. 19, 5. Juni 2001 (2001-06-05) & JP 2001 054088 A (MINOLTA CO LTD), 23. Februar 2001 (2001-02-23)
- PATENT ABSTRACTS OF JAPAN Bd. 2000, Nr. 23, 10. Februar 2001 (2001-02-10) & JP 2001 167199 A (SHU GENKO), 22. Juni 2001 (2001-06-22)

## Beschreibung

Die Erfindung betrifft ein Fernsehgerät, welches ein Empfangsteil, einen Senderspeicher, eine Bildsignalverarbeitungsstufe, eine Bildanzeigeeinheit, eine Steuereinheit, eine Bedieneinheit und einen nichtflüchtigen Speicher aufweist, welcher zur Abspeicherung von Werbebeiträgen entsprechenden Daten vorgesehen ist. Ein solches Fernsehgerät ist Gegenstand der älteren deutschen Patentanmeldung 101 09 926.6.

Es sind weiterhin bereits Fernsehgeräte bekannt, die einen Signalausfalldetektor aufweisen. Zeigt dessen Ausgangssignal an, dass ein Signalausfall vorliegt, dann wird ein Blausignal auf der Bildanzeigeeinheit dargestellt. Dies ist insbesondere dann vorteilhaft, wenn das Fernsehgerät im Schaufenster eines Gerätehändlers aufgestellt ist, da durch die Anzeige eines Blausignals anstelle eines rauschenden Bildes der auf den Betrachter einwirkende optische Eindruck verbessert ist.

Weiterhin sind bereits Fernsehgeräte bekannt, bei welchen nach einem Einschalten bis zum Erreichen einer stabilen Bilddarstellung eine Dunkeltastung des Bildschirms oder die Einblendung eines geeignet gestalteten Vorhanges erfolgt.

Aus JP 2001 054088 A ist ein System zum Übertragen und Empfangen eines Rundfunkprogramms, sowie ein entsprechender Empfänger gemäß dem Oberbegriff des Patentanspruchs 1 bekannt.

Aus US 5,907,321 A ist ein System und ein Verfahren zum Darstellen eines Zwischenkanal-Betriebspausen-Bildes in einem Kabelfernsehsystem bekannt. Bei dem Zwischenkanal-Betriebspausen-Bild handelt es sich um Werbebeiträge. Das Kabelfernsehsystem umfasst eine Kabelfernsehkopfstation mit einer Vielzahl an Kabelkanälen. Ein Teilnehmer empfängt mit seinem Fernsehgerät Zwischenkanal-Betriebspausen-Bilddaten von der Kabelfernsehkopfstation. Eine Kanalauswähleinrichtung zur Auswahl eines Kabelkanals und zum Schalten des ausgewählten Kabelkanals auf eine Bildausgabe, um das Bild darzustellen, ist vorgesehen. Die Zwischenkanal-Betriebspausen-Bilddaten werden zwischen dem Wechsel der Kabelkanäle auf der Bildausgabe für eine vorbestimmte Zeitspanne dargestellt.

Aus der US 2001/0035917 A1 ist ein Bildschirmgerät für Fernsehzuschauer bekannt. Das Bildschirmgerät umfasst Anzeigemittel zum Anzeigen von Videobildern, einen Ein-/Aus-Schalter, einen Datenspeicher, eine Steuereinrichtung zum Auslesen von Daten aus dem Datenspeicher und zum Darstellen kommunikativer Informationen, wie beispielsweise Werbebeiträge, entsprechend den ausgelesenen Daten auf dem Anzeigemittel. Dabei erfolgt das Darstellen der kommunikativen Informationen entsprechend den ausgelesenen Daten nach dem Ausschalten des Bildschirmgeräts. Ferner umfasst das Bildschirmgerät eine Einrichtung zum Setzen einer bestimmten Dauer der Darstellung der kommunikativen Informationen.

Aus der JP 2001 167199 A ist ein Werbeverfahren unter Verwendung eines Anwendercomputers oder Internetfernsehgerätes in einem Netzwerk bekannt. Bei dem Verfahren wird ein Werbefenster, welches kleiner als der Bildschirm des Anwendercomputers oder Internetfernsehgerätes ist, dargestellt. Die Darstellungszeiten der Werbebeiträge werden an einen Server übermittelt und dort am Server aufsummiert. Die Werbebeitragsempfangsrate, welche proportional zur aufsummierten Darstellungszeit in einer vorgegebenen Zeitspanne ist, wird dem Teilnehmer vergütet.

Aus der WO 98/36563 A1 ist ein Fernsehkanalempfänger bekannt. Der Fernsehkanalempfänger umfasst einen Tuner, um ein erstes Fernsehsignal von einem Eingangssignal abzuleiten, ein Gerät zum Lesen und Speichern von mindestens einer Vielzahl zweiter Fernsehsignalblöcke, welche von dem Eingangssignal und/oder von einem Speicher abgeleitet werden. Das erste Fernsehsignal weist Unterbrechungen auf während denen ein zweiter Fernsehkanalblock eingesetzt wird, um ein Verbundfernsehgerätsignal zu erhalten. Die Unterbrechungen werden mit einem ersten Steuersignal bereitgestellt, derart dass mindestens ein zweiter Fernsehkanalblock in eine Unterbrechung des ersten Fernsehsignals eingesetzt werden kann. Das Verbundfernsehgerätsignal wird auf ein Ausgabeterminal des Fernsehsignalempfängers bereitgestellt.

Die US 6,317,780 B1 beschreibt ein System und ein Verfahren zur Verteilung und zur Darstellung von Daten, wie z. B. Werbebeiträgen, von einem Host-Server zu einem Browser-Gerät in einem Kommunikationsnetzwerk. Das Browser-Gerät kann mittels eines ISDN-Modems mit dem Internet verbunden sein. Hierbei werden die Daten vorab auf das Browser-Gerät über das Kommunikationsnetzwerk übertragen und dort gespeichert. Während einer erkannten "idle-Zeit" werden diese Daten mittels des Browser-Gerätes dargestellt.

Der Erfindung liegt die Aufgabe zugrunde, die Verwendung eines Fernsehgerätes als Mittel zur Wiedergabe von Werbebeiträgen zu verbessern.

Diese Aufgabe wird durch ein Fernsehgerät mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass ein mit den beanspruchten Merkmalen versehenes Fernsehgerät nicht nur zum Betrachten von über eine Rundfunkübertragungsstrecke übertragenen Fernsehsignalen, zum Betrachten von von einem externen Videorecorder oder einem anderen externen Aufzeichnungsträger wiedergegebenen Fernsehsignalen und zur Wiedergabe von Werbebeiträgen genutzt werden kann, sondern auch zum Erhalt von geldwerten Vorteilen verwendet werden kann. Zu diesem Zweck weist ein Fernsehgerät gemäß der Erfindung Zeiterfassungsmittel auf, die zur Erfassung der Darstellungszeit der Werbebeiträge auf der Bildanzeigeeinheit vorgesehen sind. Einem Fernsehzuschauer, der in Kauf nimmt, Werbebeiträge über eine vorgegebene Darstellungszeit zu betrachten, gegebenenfalls auch im Sinne von kurzzeitigen Unterbrechungen einer laufenden Fernsehsendung, können als geldwerte Vorteile beispielsweise Kaufrabatte, Gewährleistungsverlängerungen, Gebührenerstattungen oder eine Freischaltung eines vorgegebenen Fernsehkanals gegeben werden

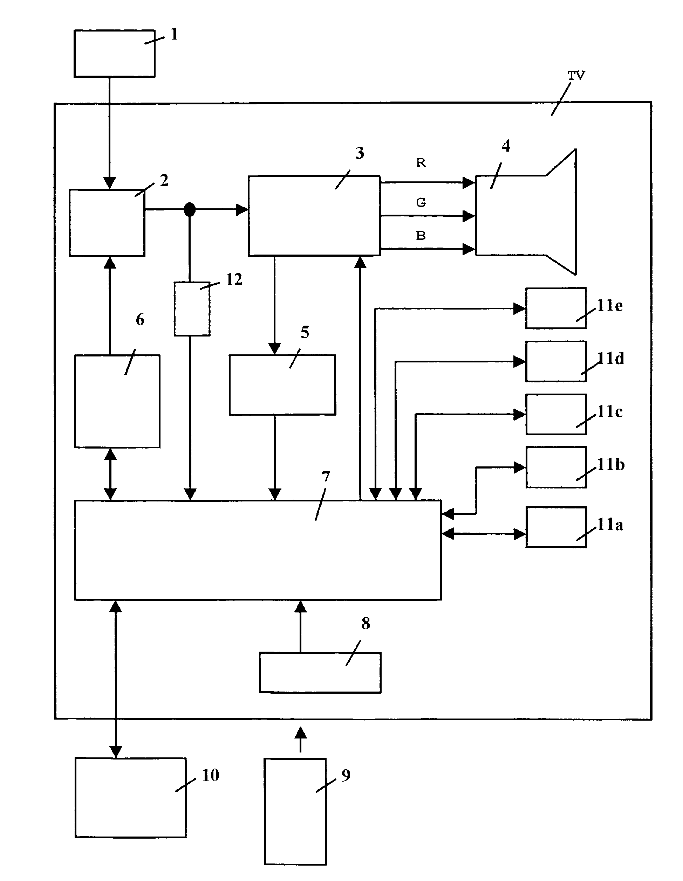

Weitere vorteilhafte Eigenschaften der Erfindung ergeben sich aus der nachfolgenden Erläuterung eines Ausführungsbeispiels anhand der Figur.

Diese zeigt ein Blockschaltbild eines erfindungsgemäßen Fernsehgerätes TV, welches an eine Antenne 1 angeschlossen ist und weiterhin mit einer ISDN-Telefonleitung 10 in Verbindung steht. Zur Bedienung des Fernsehgerätes TV ist ein Fernbedienungsgeber 9 vorgesehen. Die von diesem ausgestrahlten Infrarot-Bedienbefehle werden von einem Fernbedienempfänger 8 empfangen und von dort aus an die als Mikrocomputer realisierte Steuereinheit 7 weitergeleitet.

Aus den von der Antenne 1 abgeleiteten Fernsehsignalen, die unter anderem die Bildsignale einer Vielzahl von Fernsehsendungen umfassen, wird mittels der Empfangseinheit 2 eine Fernsehsendung ausgewählt und die dieser entsprechenden Signale in Form eines FBAS-Signals am Ausgang der Empfangseinheit zur Verfügung gestellt. Dieses FBAS-Signal wird an eine Bildsignalverarbeitungseinheit 3 und an eine Synchronsignalabtrennstufe 12 weitergeleitet.

In der Synchronsignalabtrennstufe 12 werden die Synchronsignale aus dem FBAS-Signal abgetrennt und an die Steuereinheit 7 weitergeleitet. Die am Ausgang der Empfangseinheit zur Verfügung gestellten FBAS-Signale werden in der Bildsignalverarbeitungseinheit 3 aufbereitet und in R, G, B-Signale umgewandelt. Diese werden einer Bildanzeigeeinheit 4 zugeführt und dort dargestellt.

Weiterhin weist die gezeigte Vorrichtung einen Senderspeicher 6 auf, in welchem eine Vielzahl von Fernsehsendern zugeordnete Sender- bzw. Empfangsdaten abgespeichert sind. Diese können durch einen mittels der Fernbedieneinheit im Sinne einer Umschaltung auf einen gewünschten Sender eingegebenen Befehl unter Steuerung durch die Steuereinheit 7 aus dem Senderspeicher 6 ausgelesen und zur Abstimmung der Empfangseinheit 2 auf den gewünschten Sender verwendet werden. Die von den Geräteherstellern heute üblicherweise eingebauten Senderspeicher haben eine so große Speicherkapazität, dass im allgemeinen eine Vielzahl von Speicherplätzen des Senderspeichers nicht mit Empfangsdaten von Sendern belegt ist.

Ferner ist das gezeigte Fernsehgerät mit einem Signalausfalldetektor versehen. Dieser kann von der Steuereinheit 7 selbst gebildet sein, die anhand des Vorliegens oder Fehlens von Synchronimpulsen erkennt, ob ein Signalausfall vorliegt oder nicht. Alternativ dazu oder zusätzlich kann ein eigener Signalausfalldetektor 5 vorgesehen sein, der mit der Bildsignalverarbeitungseinheit 3 in Verbindung steht und das Vorliegen eines Signalausfalls anhand der in der Bildsignalverarbeitungseinheit vorliegenden Bildsignale detektiert.

Die Steuereinheit 7 steht weiterhin in Verbindung mit nichtflüchtigen Speichern 11 a - 11 e des Fernsehgerätes TV. Im Speicher 11 a sind Daten abgespeichert, die Werbebeiträgen entsprechen und in Form von Einzelbildern vorliegen.

Diese Daten wurden vorzugsweise bereits bei der Herstellung des Fernsehgerätes im Werk im Speicher 11a nichtflüchtig abgespeichert. Sie enthalten das Logo des Herstellers, ein Service-Händlerverzeichnis, Kontaktadressen des Geräteherstellers, Informationen über die Herstellerfirma und/oder Informationen über die Produktpalette des Geräteherstellers.

Alternativ oder zusätzlich dazu können auch vom Händler des Gerätes Werbebeiträgen entsprechende Daten im Speicher 11 a des Fernsehgerätes nichtflüchtig abgespeichert werden. Dabei kann es sich um händlerspezifische Informationen handeln wie die Kontaktadresse des Händlers, die vom Händler angebotene Produktpalette und/oder um Informationen über die Serviceleistungen des Händlers.

Weiterhin können alternativ oder zusätzlich dazu auch Informationen und/oder Werbungsseiten von anderen, am Verkaufsort des Fernsehgerätes ansässigen Firmen und Behörden im Speicher 11a abgespeichert werden, beispielsweise Informationen über lokale Zeitungen, lokale Kfz-Händler und Kfz-Werkstätten, lokale Lebensmittelhändler, lokale Verbrauchermärkte, kommunale Informationen, etc.

Der Speicher 11 a kann als ROM ausgebildet sein. In diesem Fall ist sein Inhalt fest vorgegeben und nicht veränderbar. Vorzugsweise handelt es sich beim Speicher 11 a jedoch um ein RAM, einen Flash-Speicher oder - insbesondere für größere Datenmengen - einen Festplattenspeicher. Bei diesen Speichern können die abgespeicherten Daten bei Bedarf aktualisiert werden, beispielsweise bei jeder Reparatur des Gerätes durch den Service-Händler. So kann der Händler über die für einen Software-Update des Gerätes notwendige Flash-Ladestation seine individuellen Informations- und Werbeinhalte, z. B. eine persönliche Kundenbegrüßung, im Speicher 11a des Gerätes TV hinterlegen.

Die Anzeige dieser Informationen auf der Bildanzeigeeinheit 4 erfolgt nach Eingabe eines mittels der Fernbedienung 9 eingegebenen Bedienbefehls. Vorzugsweise weist die Fernbedienung 9 weiterhin Tasten auf, beispielsweise +/- -Tasten, mittels derer zwischen einer Vielzahl von abgespeicherten Informations- und Werbungsseiten umgeblättert werden kann. Eine Betriebsart kann auch in einer Endlos-Wiedergabe der abgespeicherten Informations- und Werbungsseiten bestehen. Diese Betriebsart ist vor allem dann vorteilhaft, wenn das Fernsehgerät in einem Schaufenster aufgestellt ist.

Weiterhin erfolgt eine Anzeige der abgespeicherten Werbungsseiten dann automatisch, wenn mittels der Steuereinheit 7 oder des Signalausfalldetektors 5 Signalausfälle detektiert werden. Durch die Anzeige abgespeicherter Werbungsseiten wird dann, wenn Signalausfälle vorliegen, in vorteilhafter Weise erreicht, dass während der Signalausfallzeiten kein rauschendes, unruhiges Bild zu sehen ist. Dies ist insbesondere dann von Vorteil, wenn das Fernsehgerät im eingeschalteten Zustand in einem Ausstellungsraum oder einem Schaufenster aufgestellt ist.

Ferner erfolgt eine Anzeige der abgespeicherten Werbungsseiten auch dann automatisch, wenn der Benutzer wissentlich oder versehentlich einen nicht mit Programmdaten belegten Speicherplatz des Senderspeichers 6 anwählt. Auch in diesem Falle wird vermieden, dass auf dem Bildschirm des Fernsehgerätes ein rauschendes, unruhiges Bild zu sehen ist.

Ferner können die abgespeicherten Werbungsseiten auch während des Hochlaufens des Fernsehgerätes nach dessen Einschalten automatisch angezeigt werden. Moderne Fernsehgeräte benötigen mehrere Sekunden, bis eine stabile Bildwiedergabe möglich ist, da der Bildschirm eine Vorwärmzeit benötigt und das Fernsehgerät erst mit einem empfangenen Signal synchronisiert werden muss. Die Zeit bis zum Erreichen dieses stabilen Zustandes kann in vorteilhafter Weise dazu verwendet werden, eine abgespeicherte Werbungsseite anzuzeigen, beispielsweise eine herstellerspezifische Werbungsseite. Dadurch wird der Einschaltvorgang des Gerätes optisch erträglicher und informativer gestaltet.

Die ISDN-Telefonleitung 10 des gezeigten Fernsehgerätes TV wird dazu verwendet, aus dem Internet Werbeseiten herunterzuladen und im Speicher 11 a nichtflüchtig abzuspeichern. Die über die ISDN-Leitung der Steuereinheit 7 zugeführten HTML-Seiten werden von der Steuereinheit 7 umcodiert und in den Speicher 11 a übertragen. Von dort können sie - wie oben beschrieben wurde - abgerufen und auf der Bildanzeigeeinheit 4 dargestellt werden.

Zu einem Herunterladen von neuen Werbeseiten aus dem Internet erfolgt mittels des Fernbedienungsgebers 9 eine Anwahl der jeweiligen, die Werbeseiten enthaltenden Internetadresse und eine ebenfalls mittels des Fernbedienungsgebers 9 gesteuerte Auswahl der herunterzuladenden Daten. Diese Auswahl wird vorzugsweise durch eine auf der Anzeigeeinheit des Fernsehgerätes dargestellte Menüseite unterstützt.

Die Vorteile einer Ableitung der im Speicher 11a abgespeicherten Werbeseiten aus dem Internet bestehen darin, dass diese Seiten stets aktuell sind. Dies eröffnet den oben genannten Geschäftsleuten und Behörden die Möglichkeit, die Endverbraucher ohne Zeitverzögerung über aktuelle Themen zu unterrichten.

Gemäß der vorliegenden Erfindung wird der Fernsehzuschauer für seine Bereitschaft, zusätzliche Werbung auch während laufender Fernsehsendungen zu betrachten, durch geldwerte Vorteile belohnt. Diese geldwerten Vorteile bestehen beispielsweise darin, dem Fernsehzuschauer Kaufrabatte einzuräumen, eine Garantiezeitverlängerung zu gewähren, Gebühren, beispielsweise Fernsehgebühren, zu erstatten oder einen bestimmten Fernsehkanal freizuschalten.

Gemäß einer ersten Ausführungsform der Erfindung werden entweder vom Gerätehersteller oder vom Gerätehändler in einem nichtflüchtigen Speicher 11b des Fernsehgerätes die Werbungseinblendung beeinflussende Steuerdaten abgelegt. Zu diesen Steuerdaten gehören Informationen über die Zeitpunkte und die Zeitdauer von Werbeeinblendungen, die ihrerseits im nichtflüchtigen Speicher 11a hinterlegt werden. Die Zeitdauer einer Werbeeinblendung kann beispielsweise 30 Sekunden betragen. Die Zeitpunkte der Werbeeinblendung bzw. die Zeitabstände zwischen aufeinanderfolgenden Werbeeinblendungen können 30 Minuten sein. Die Einblendung der Werbung erfolgt entweder anstelle des Fernsehbildes, so dass für den Fernsehzuschauer die laufende Fernsehsendung für eine Dauer von 30 Sekunden unterbrochen wird, oder in Form einer Einblendung in das laufende Fernsehbild.

Weiterhin wird bei dieser ersten Ausführungsform der Erfindung vom Gerätehersteller oder Händler im Speicher 11b auch eine Information über ein Sollzeitintervall abgelegt, welches der Soll-Gesamtdarstellungszeit der Werbeeinblendung auf der Bildanzeigeeinheit 4 entspricht. Dieses Sollzeitintervall wird während des Gerätebetriebes mit einem Istzeitintervall verglichen, welches einem aufsummierten Wert der bisherigen Ist-Darstellungszeiten der Werbeeinblendungen entspricht. Zur Erfassung der Ist-Darstellungszeiten sind Zeiterfassungsmittel vorgesehen, die beim gezeigten Ausführungsbeispiel von der Steuereinheit 7 gebildet werden. Der aufsummierte Wert für die Ist-Darstellungszeiten der Werbeeinblendungen wird im nichtflüchtigen Speicher 11c abgespeichert und wird beim bzw. nach dem Betrachten einer Werbeeinblendung ständig aktualisiert.

Erreicht der aufsummierte Wert der Ist-Darstellungszeiten der Werbeeinblendungen die Soll-Gesamtdarstellungszeit, dann hat der Fernsehzuschauer seine Gegenleistung für den ihm gewährten geldwerten Vorteil erbracht und eine Einblendung von Werbebeiträgen erfolgt nur noch beim Hochlauf des Gerätes, bei Senderausfällen und bei einer Anwahl nicht belegter Programmplätze und nicht mehr im Sinne einer Unterbrechung laufender Fernsehsendungen.

Gemäß einer zweiten Ausführungsform der Erfindung ist eine Überwachung des aufsummierten Wertes der Ist-Darstellungszeiten der Werbeeinblendungen durch den Werbungsanbieter vorgesehen. Bei diesem Werbungsanbieter handelt es sich um eine beliebige Firma, deren Werbeseiten im nichtflüchtigen Speicher 11 a abgespeichert sind.

Zur Durchführung der genannten Überwachung, die über das Internet erfolgt, ist im nichtflüchtigen Speicher 11b die Internetadresse des Werbungsanbieters abgespeichert. Nach dem Einschalten des Fernsehgerätes TV durch Betätigung des Einschaltknopfes oder einer Taste des Fernbedienungsgebers 9 initiiert die Steuereinheit 7 automatisch unter Verwendung der abgespeicherten Internetadresse den Aufbau einer Internetverbindung über die ISDN-Telefonleitung 10 zum Werbungsanbieter. Ist die Internetverbindung aufgebaut, dann erfolgt eine Übertragung, in einer vorteilhaften Ausgestaltung der Erfindung eine verschlüsselte Übertragung, des im Speicher 11c abgespeicherten aufsummierten Wertes der Ist-Darstellungszeiten zusammen mit einer Geräte-Identifikationsnummer, die im nichtflüchtigen Speicher 11d abgespeichert ist, zum Werbungsanbieter. Dieser überprüft anhand des übertragenen aufsummierten Wertes der Ist-Darstellungszeiten, ob der Fernsehzuschauer seinen Verpflichtungen, Werbebeiträge in einem bestimmten Umfang zu konsumieren, nachkommt oder nicht. Kommt der Fernsehzuschauer diesen Verpflichtungen nicht nach, dann werden ihm gewährte geldwerte Vorteile gestrichen, beispielsweise eine Erstattung von Fernsehgebühren oder eine Freischaltung eines gebührenpflichtigen Fernsehkanals. Kommt der Fernsehzuschauer seinen Verpflichtungen nach, dann werden ihm die Vergünstigungen weiterhin gewährt.

Weiterhin können bei dieser Ausführungsform, bei welcher das Fernsehgerät TV mit dem Werbungsanbieter online in Verbindung steht, automatisch aktualisierte Werbeseiten in das Fernsehgerät übertragen und dort im nichtflüchtigen Speicher 11a abgespeichert werden. Diese aktualisierten Werbeseiten enthalten aktuelle Informationen des Werbungsanbieters, beispielsweise Hinweise auf gültige Sonderangebote, aktuelle Veranstaltungen, Adressenänderungen oder Hinweise auf die Eröffnung einer neuen Filiale.

Ferner können bei dieser Ausführungsform, bei welcher das Fernsehgerät TV mit dem Werbungsanbieter online in Verbindung steht, automatisch Softwareprogramme in das Fernsehgerät geladen werden, mittels derer dort die Steuerung und Überwachung der Werbungseinblendungen vorgenommen wird.

Gemäß einer dritten Ausführungsform der Erfindung werden die Werbungsinhalte zusammen mit einem Fernsehsignal zu den Fernsehzuschauern übertragen, können jedoch nur bei registrierten Kunden auf dem Bildschirm gezeigt werden. Diese Übertragung im Fernsehsignal kann beim Vorliegen eines analogen Fernsehsignals ähnlich einem Videotextsignal in reservierten Zeilen der Vertikalaustastlücken erfolgen. Auf diese reservierten Zeilen der Vertikalaustastlücken haben nur registrierte Kunden Zugriff. Die Registrierung der Kunden kann dabei über Telefon oder Internet erfolgen. Die Steuerung und Überwachung des Werbekonsums erfolgt über die Software des jeweiligen Fernsehgerätes in Verbindung mit einer Zusatz-Software, die vom jeweiligen Werbetreibenden dem Endverbraucher entweder über das Internet oder mittels eines in das Fernsehgerät ladbaren Datenträgers zur Verfügung gestellt wird, beispielsweise einer CD-ROM oder einer DVD.

Beim Vorliegen eines digitalen Fernsehsignals werden die Werbungsinhalte in Form von digitalen Datenpaketen, die im Zeitmultiplex mit den Datenpaketen des Fernsehsignals übertragen werden, zum Endverbraucher übertragen.

Gemäß einer vierten Ausführungsform der Erfindung erfolgt eine Auswahl und Abwahl von Werbeanbietern seitens des Kunden über das Internet, über welches die Fernsehzuschauer Zugriff zu einer Website haben, die eine übersicht über die in Frage kommenden Werbeanbieter, deren Werbedaueranspruch und die von diesen angebotenen geldwerten Vorteile enthält. Die Registrierung eines Kunden erfolgt in diesem Fall unter Angabe der jeweiligen Geräte-Identifikationsnummer, die zur Verifizierung eines automatischen Herunterladens der Werbeinhalte dient. Das die heruntergeladenen Daten empfangende Fernsehgerät quittiert den Empfang der Daten mit seiner Identifikationsnummer, so dass der Werbeanbieter sicher sein kann, den jeweiligen Konsumenten mit seiner Werbung zu erreichen. Mit der Registrierung und dem ersten Herunterladen von Werbedaten erhält das jeweilige Fernsehgerät auch die Internetadresse des Werbeanbieters, unter welcher künftig aktualisierte Werbedaten abzuholen sind. Die genannte Internetadresse, der Werbedaueranspruch des jeweiligen Werbungsanbieters und die Werbeinhalte werden wie bei den obigen Ausführungsbeispielen nichtflüchtig im Fernsehgerät TV abgespeichert.

Alternativ zu der oben beschriebenen automatischen Herstellung einer Internetverbindung nach jedem Einschalten des Fernsehgerätes kann auch eine tägliche, wöchentliche oder monatliche Herstellung einer Internetverbindung mit dem Werbeanbieter vorgesehen sein.

Um sicherzustellen, dass der Fernsehzuschauer auch tatsächlich die einmal vereinbarten Werbezeitdauern und Werbezeitpunkte einhält, besteht für ihn keine Möglichkeit, mittels der Bedieneinheit des Gerätes die automatisch erfolgende Übertragung von Daten zwischen dem Fernsehgerät und dem Werbungsanbieter zu unterbrechen und auch keine Möglichkeit, die einmal vereinbarten oder vorgegebenen Werbevertragsbedingungen selbstständig abzuändern. Ein eventueller Wechsel des Speichermediums, auf welchem die Vertragsdaten (Konsumdauer, Konsumzeitpunkte, ...) gespeichert sind, wird vom Werbetreibenden nach Aufbau der automatischen Internetverbindung erkannt. Der Werbetreibende kann dann gegebenenfalls gegenüber dem Verbraucher geeignete Maßnahmen ergreifen, wenn dies notwendig ist.

### Bezugszeichenliste:

- 1: Antenne
- 2: Empfangseinheit
- 3: Bildsignalverarbeitungseinheit
- 4: Bildanzeigeeinheit
- 5: Signalausfalldetektor
- 6: Senderspeicher
- 7: Steuereinheit
- 8: Fernbedienungsempfänger
- 9: Fernbedienungsgeber
- 10: ISDN-Telefonleitung
- 11 a: Speicher für Werbeinhalte
- 11 b: Speicher für Steuerdaten
- 11 c: Speicher für aufsummierten Wert der Darstellungszeit der Werbebeiträge
- 11 d: Speicher für Geräteidentifikationsnummer
- 11e: Speicher für Überwachungsprogramm

- TV: Fernsehgerät

## Patentansprüche

1. Fernsehgerät, welches ein Empfangsteil (2), einen Senderspeicher (6), eine Bildsignalverarbeitungseinheit (3), eine Bildanzeigeeinheit (4), eine Steuereinheit (7), eine Bedieneinheit (9) und einen nichtflüchtigen Speicher (11) aufweist, welcher zur Abspeicherung von Werbebeiträgen entsprechenden Daten vorgesehen ist, und wobei das Fernsehgerät weiterhin Zeiterfassungsmittel (7) aufweist, die zur Erfassung der Darstellungszeit der Werbebeiträge auf der Bildanzeigeeinheit (4) vorgesehen sind,
**dadurch gekennzeichnet, dass**
die Steuereinheit (7) beim Erkennen einer Anwahl eines nicht mit Senderdaten belegten Programmplatzes des Senderspeichers (6) ein Auslesen der Daten aus dem nichtflüchtigen Speicher (11 a) und deren Darstellung auf der Bildanzeigeeinheit (4) steuert.

2. Fernsehgerät nach Anspruch 1,
**dadurch gekennzeichnet, dass**
die den Werbebeiträgen entsprechenden Daten werksseitig abgespeicherte Daten enthalten.

3. Fernsehgerät nach Anspruch 1 oder 2,
**dadurch gekennzeichnet, dass**
die den Werbebeiträgen entsprechenden Daten händlerseitig abgespeicherte Daten enthalten.

4. Fernsehgerät nach einem der Ansprüche 1 - 3,
**dadurch gekennzeichnet, dass**
die den Werbebeiträgen entsprechenden Daten einem Datenträger entnommene Daten und/oder aus dem Internet abgeleitete Daten enthalten.

5. Fernsehgerät nach einem der vorhergehenden Ansprüche,
**dadurch gekennzeichnet, dass**
der nichtflüchtige Speicher (11a) ein ROM, ein RAM, ein Flash-Speicher oder ein Festplattenspeicher ist.

6. Fernsehgerät nach einem der vorhergehenden Ansprüche,
**dadurch gekennzeichnet, dass**
es einen Signalausfalldetektor (5) aufweist und die Steuereinheit (7) bei erkanntem Signalausfall ein Auslesen von Daten aus dem nichtflüchtigen Speicher (11a) und deren Darstellung auf der Bildanzeigeeinheit (4) steuert.

7. Fernsehgerät nach einem der vorhergehenden Ansprüche,
**dadurch gekennzeichnet, dass**
die Steuereinheit (7) nach dem Erkennen eines Einschaltbefehls ein Auslesen von Daten aus dem nichtflüchtigen Speicher (11a) und deren Darstellung auf der Bildanzeigeeinheit (4) steuert.

8. Fernsehgerät nach einem der Ansprüche 4 - 6,
**dadurch gekennzeichnet, dass**
die im nichtflüchtigen Speicher (11a) abgespeicherten Daten mittels aus dem Internet abgeleiteter Daten automatisch aktualisiert werden.

9. Fernsehgerät nach einem der vorhergehenden Ansprüche,
**dadurch gekennzeichnet, dass**
es einen nichtflüchtigen Speicher (11 b) aufweist, der zur Abspeicherung von Informationen über Werbungsdarstellungs-Zeitintervalle dient.

10. Fernsehgerät nach Anspruch 8,
**dadurch gekennzeichnet, dass**
die Informationen über die Werbungsdarstellungs-Zeitintervalle eine Information über eine Zeitdauer enthalten, für welche eine Werbungsdarstellung auf der Bildanzeigeeinheit (4) erfolgt.

11. Fernsehgerät nach Anspruch 8 oder 9,
**dadurch gekennzeichnet, dass**
die Informationen über die Werbungsdarstellungs-Zeitintervalle eine Information über Zeitabstände zwischen aufeinanderfolgenden Werbungsdarstellungen auf der Bildanzeigeeinheit (4) enthalten.

12. Fernsehgerät nach einem der Ansprüche 8 - 10,
**dadurch gekennzeichnet, dass**
es einen nichtflüchtigen Speicher (11b) aufweist, der zur Abspeicherung einer Information über ein Sollzeitintervall vorgesehen ist, welches einer Soll-Gesamtdarstellungszeit der Werbebeiträge auf der Bildanzeigeeinheit (4) entspricht.

13. Fernsehgerät nach einem der Ansprüche 8 - 11,
**dadurch gekennzeichnet, dass**
es einen nichtflüchtigen Speicher (11 b) aufweist, der zur Abspeicherung einer online-Adresseninformation eines Werbungsanbieters vorgesehen ist.

14. Fernsehgerät nach Anspruch 11 oder 12,
**dadurch gekennzeichnet, dass**
es einen nichtflüchtigen Speicher (11c) aufweist, der zur Abspeicherung eines aufsummierten Wertes der mittels der Zeiterfassungsmittel (7) erfassten Ist-Darstellungszeit der Werbebeiträge vorgesehen ist, dass die Steuereinheit (7) zum Vergleichen der dem Sollzeitintervall entsprechenden Information mit der dem aufsummierten Wert der Ist-Darstellungszeit entsprechenden Information vorgesehen ist und dann, wenn der aufsummierte Wert der Ist-Darstellungszeit größer oder gleich dem Sollzeitintervall ist, die Information über die Werbungsdarstellungs-Zeitintervalle löscht.

15. Fernsehgerät nach einem der vorhergehenden Ansprüche,
**dadurch gekennzeichnet, dass**
die Steuereinheit (7) dazu vorgesehen ist, nach dem Erkennen eines Einschaltbefehls oder in regelmäßigen Zeitabständen automatisch den Aufbau einer Internetverbindung über die ISDN-Telefonleitung (10) zu initiieren.

16. Fernsehgerät nach Anspruch 15,
**dadurch gekennzeichnet, dass**
die Steuereinheit (7) dazu vorgesehen ist, nach dem Aufbau einer Internetverbindung ein Auslesen von Daten über den aufsummierten Wert der Darstellungszeiten der Werbebeiträge aus dem Speicher (11c) sowie eine Übertragung dieser Daten über die ISDN-Telefonleitung (10) an den Werbeanbieter zu initiieren.

17. Fernsehgerät nach Anspruch 16,
**dadurch gekennzeichnet, dass**
es einen nichtflüchtigen Speicher (11d) für eine Geräteidentifikationsnummer aufweist und die Steuereinheit (7) dazu vorgesehen ist, nach dem Aufbau einer Internetverbindung ein Auslesen von Daten über den aufsummierten Wert der Darstellungszeit der Werbebeiträge und der Geräteidentifikationsnummer sowie eine Übertragung dieser Daten über die ISDN-Telefonleitung (10) an den Werbeanbieter zu initiieren.

## Claims

1. Television set, which has a receiver section (2), a station memory (6), a picture signal processing unit (3), an image display unit (4), a control unit (7), an operating unit (9) and a non-volatile memory (11) that is set up to save data corresponding to advertisements, and wherein the television set furthermore has a time-recording device (7) that is set up to collect the display time of the advertisements on the image display unit (4),
**characterised in that**
when the control unit (7) identifies the selection of a channel from the station memory (6) that is not allocated with station data it operates a read-out of the data from the non-volatile memory (11a) and displays it on the image display unit (4).

2. Television set according to claim 1,
**characterised in that**
the data corresponding to the advertisements include data stored while in the factory.

3. Television set according to claim 1 or 2,
**characterised in that**
the data corresponding to the advertisements include data stored by the retailer.

4. Television set according to one of the claims 1 - 3,
**characterised in that**
the data corresponding to the advertisements include data taken from a data storage medium and/or from the internet.

5. Television set according to one of the previous claims,
**characterised in that**
the non-volatile memory (11a) is ROM, RAM, a flash memory or a hard disk.

6. Television set according to one of the preceding claims,
**characterised in that**
it has a signal drop-out detector (5) and the control unit (7) operates a read-out of data from the non-volatile memory (11a) and displays it on the image display unit (4) in case of identified signal drop-out.

7. Television set according to one of the preceding claims,
**characterised in that**
the control unit (7) operates a read-out of data from the non-volatile memory (11a) and displays it on the image display unit (4) in case of recognition of an actuation signal.

8. Television set according to one of the claims 4 - 6,
**characterised in that**
the data stored in the non-volatile memory (11a) are automatically updated by means of data taken from the internet.

9. Television set according to one of the preceding claims,
**characterised in that**
it has a non-volatile memory (11b) that can store information about advertisement time periods.

10. Television set according to claim 8,
**characterised in that**
the information about advertisement time periods includes a piece of information about the duration for which an advertisement is shown on the image display unit (4).

11. Television set according to claim 8 or 9,
**characterised in that**
the information about the advertisement time periods includes a piece of information about time gaps between the display of successive advertisements on the image display unit (4).

12. Television set according to one of the claims 8 - 10,
**characterised in that**
it has a non-volatile memory (11b) that is set up to store a piece of information about a target time period, which corresponds to an target total display time for the advertisement on the image display unit (4).

13. Television set according to one of the claims 8 - 11,
**characterised in that**
it has a non-volatile memory (11b) that is set up to record a piece of information about the online address of an advertisement provider.

14. Television set according to claim 11 or 12,
**characterised in that**
it has a non-volatile memory (11c) that is set up to record a sum value of the actual display time of the advertisement detected by means of the time-recording device (7), **in that** the control unit (7) is set up to compare the information corresponding to the target time period with the information corresponding to the sum value of the actual time period and then deletes the information about the advertisement display time periods if the sum value of the actual display time is greater than or equal to the target time period.

15. Television set according to one of the preceding claims,
**characterised in that**
the control unit (7) is set up to initiate an internet connection over the ISDN telephone line (10) after identifying an actuation signal or at regular intervals.

16. Television set according to claim 15,
**characterised in that**
the control unit (7) is set up to initiate a readout of data about the sum value of the display times of the advertisements from the memory (11c), and a transmission of these data over the ISDN telephone line (10) to the advertisement provider, after an internet connection has been established.

17. Television set according to claim 16,
**characterised in that**
it has a non-volatile memory (11d) for a device identification number and the control unit (7) is set up to initiate a read-out of data about the sum value of the display time of the advertisements and the device identification number, and a transmission of these data over the ISDN telephone line (10) to the advertisement provider, after an internet connection has been established.

## Revendications

1. Appareil de télévision, qui présente une partie de réception (2), une mémoire d'émetteur (6), une unité de traitement de signal d'image (3), une unité d'affichage d'image (4), une unité de commande (7), une unité d'opération (9) et une mémoire (11) non volatile, qui est prévue pour le stockage de données correspondant à des articles publicitaires, et l'appareil de télévision présentant également des moyens d'enregistrement de temps (7), qui sont prévus pour l'enregistrement du temps de présentation des articles publicitaires sur l'unité d'affichage d'image (4),
**caractérisé en ce que**
lors de la reconnaissance d'un choix d'un emplacement de programme non occupé avec des données d'émetteur, de la mémoire d'émetteur (6), l'unité de commande (7) commande une extraction de données de la mémoire (11 a) non volatile et leur affichage sur l'unité d'affichage d'image (4).

2. Appareil de télévision selon la revendication 1,
**caractérisé en ce que**
les données correspondant à des articles publicitaires contiennent des données stockées en usine.

3. Appareil de télévision selon la revendication 1 ou 2,
**caractérisé en ce que**
les données correspondant aux articles publicitaires contiennent des données stockées par le revendeur.

4. Appareil de télévision selon l'une des revendications 1 à 3,
**caractérisé en ce que**
les données correspondant aux articles publicitaires contiennent des données relevées sur un support de données et/ou des données déduites d'Internet.

5. Appareil de télévision selon l'une des revendications précédentes,
**caractérisé en ce que**
la mémoire non volatile (11a) est une ROM, une RAM, une mémoire flash ou une mémoire à disque dur.

6. Appareil de télévision selon l'une des revendications précédentes,
**caractérisé**
**en ce qu'**il présente un détecteur de défaillance de signal (5) et, en cas de défaillance de signal détectée, l'unité de commande (7) commande une extraction de données de la mémoire non volatile (11a) et leur affichage sur l'unité d'affichage d'image (4).

7. Appareil de télévision selon l'une des revendications précédentes,
**caractérisé en ce que**
l'unité de commande (7) commande, après l'identification d'une instruction d'enclenchement, une extraction de données de la mémoire non volatile (11a) et leur présentation sur l'unité d'affichage d'image (4).

8. Appareil de télévision selon l'une des revendications 4 à 6,
**caractérisé en ce que**
les données stockées dans la mémoire non volatile (11a) sont actualisées automatiquement au moyen de données déduites d'Internet.

9. Appareil de télévision selon l'une des revendications précédentes,
**caractérisé**
**en ce qu'**il présente une mémoire non volatile (11 b), qui sert à stocker des informations sur des intervalles de temps de présentation de publicité.

10. Appareil de télévision selon la revendication 8,
**caractérisé en ce que**
les informations sur les intervalles de temps de présentation de publicité contiennent une information sur une durée pour laquelle on a une présentation de publicité sur l'unité d'affichage d'image (4).

11. Appareil de télévision selon la revendication 8 ou 9,
**caractérisé en ce que**
les informations sur les intervalles de temps de présentation de publicité contiennent une information sur des intervalles de temps entre des présentations de publicité successives sur l'unité d'affichage d'image (4).

12. Appareil de télévision selon l'une des revendications 8 à 10,
**caractérisé**
**en ce qu'**il présente une mémoire non volatile (11 b), qui est prévue pour le stockage d'une information sur un intervalle de temps prévu qui correspond à un temps de présentation global prévu des articles publicitaires sur l'unité d'affichage d'image (4).

13. Appareil de télévision selon l'une des revendications 8 à 11,
**caractérisé**
**en ce qu'**il présente une mémoire (11 b) non volatile, qui est prévue pour le stockage d'une information d'adresse en ligne d'un prestataire de publicité.

14. Appareil de télévision selon la revendication 11 ou 12,
**caractérisé**
**en ce qu'**il présente une mémoire non volatile (11 c), qui est prévue pour le stockage d'une valeur cumulée du temps de présentation réel, enregistré à l'aide des moyens d'enregistrement de temps (7), des articles publicitaires, en ce que l'unité de commande (7) est prévue pour comparer l'information correspondant à l'intervalle de temps prévu avec l'information correspondant à la valeur cumulée du temps de présentation réel et, lorsque la valeur cumulée du temps de présentation réel est supérieure ou égale à l'intervalle de temps prévu, efface l'information sur les intervalles de temps de présentation de publicité.

15. Appareil de télévision selon l'une des revendications précédentes,
**caractérisé en ce que**
l'unité de commande (7) est prévue pour initier automatiquement l'établissement d'une liaison Internet par la ligne de téléphone RNIS (10) après l'identification d'une instruction d'enclenchement ou à des intervalles de temps réguliers.

16. Appareil de télévision selon la revendication 15,
**caractérisé en ce que**
l'unité de commande (7) est prévue pour initier, après l'établissement d'une liaison Internet, une extraction de données sur la valeur cumulée des temps de présentation des articles publicitaires de la mémoire (11 c) et une transmission de ces données via la ligne de téléphone ISDN (10) au prestataire de publicité.

17. Appareil de télévision selon la revendication 16,
**caractérisé**
**en ce qu'**il présente une mémoire (11 d) non volatile pour un numéro d'identification de l'appareil et l'unité de commande (7) est prévue pour initier après l'établissement d'une liaison Internet une extraction de données sur la valeur cumulée du temps de présentation des articles publicitaires et du numéro d'identification de l'appareil ainsi qu'une transmission des ces données via la ligne de téléphone RNIS (10) au prestataire de publicité.
